# NEW EUROPEAN PATENT SPECIFICATION

(11) **EP 1 401 907 B2**
(45) Date of publication and mention of the opposition decision: **28.05.2014**
(45) Mention of the grant of the patent: 08.11.2006
(21) Application number: 02732700.6
(22) Date of filing: 06.05.2002
(51) Int. Cl.: C08G 18/42, C08G 18/72, C08G 18/79, C09D 175/06

(54) **COATING COMPOSITION COMPRISING A POLYISOCYANATE AND A POLYESTER OLIGOMER PREPARED FROM A POLYOL, A POLY-CARBOXYLIC ACID, AND A MONOCARBOXYLIC ACID**
BESCHICHTUNGSZUSAMMENSETZUNG ENTHALTEND EIN POLYISOCYANAT UND EIN POLYESTEROLIGOMER HERGESTELLT AUS EINEM POLYOL, EINER POLYKARBONSÄURE UND EINER MONOKARBONSÄURE
COMPOSITION DE REVETEMENT CONTENANT UN POLYISOCYANATE ET UN OLIGOMERE POLYESTER PREPARES A PARTIR D'UN POLYOL, D'UN ACIDE POLYCARBOXYLIQUE ET D'UN ACIDE MONOCARBOXYLIQUE

(30) Priority: 01.06.2001 EP 01202083; 09.07.2001 US 303902 P
(43) Date of publication of application: 31.03.2004
(73) Proprietor: Nuplex Resins B.V., 4600 AB Bergen op Zoom (NL)
(72) Inventor: VANDEVOORDE, Paul, Marie, B-2910 Essen (BE)
(74) Representative: Derks, Wilbert
(86) International application number: PCT/EP2002/004967
(87) International publication number: WO 2002/098942

(56) References cited:
- EP-A- 0 720 996
- EP-A2- 0 440 934
- EP-B1- 0 837 891
- WO-A-98/16583
- WO-A1-96/02585
- WO-A1-96/20968
- WO-A1-98/16583
- US-A- 4 298 658
- US-A- 5 468 802

## Description

The invention relates to coating compositions comprising a polyester oligomer and a polyisocyanate useful in the field of finishing and refinishing of automobiles and large transportation vehicles. The coating compositions are particularly useful as primers and topcoats in multi-layered coating systems.

For environmental reasons, it is required to use a coating composition which can be applied easily using spray application at a low volatile organic content (VOC). Coatings with a lower organic solvent content emit lower levels of solvent when they are used and so the atmosphere becomes less polluted.

One way to achieve a lower solvent content is to use so-called high solids compositions. Such compositions comprise a relatively high level of non-volatile materials such as film forming polymer, pigments, and fillers, and a relatively low level of organic solvent. A problem when formulating high solids coating compositions is that such compositions have an unacceptably high viscosity due to the high molecular weight of the conventional film forming polymer. The high viscosity gives rise to problems in spray application with poor paint atomisation and poor flow-out and, consequently, low gloss levels and poor appearance.

The use of low-molecular weight film forming polymers, which results in adequate application viscosities, has as a disadvantage that the resulting coating is soft and is easily damaged. Therefore, these coatings are unsuitable for highly demanding application areas such as the finishing and refinishing of automobiles and large transportation vehicles.

WO 96/20968 discloses a high solids coating composition comprising a polyacrylate polyol, an oligo-ester, and a polyisocyanate. The use of the oligo-ester taken alone would not provide a coating with sufficient hardness. A polyacrylate polyol is added to accomplish the hardness build-up.

WO 98/16583 discloses a coating composition comprising a polyurethane polyol, a polyester, and a polyisocyanate. Again, the polyurethane is present in the coating composition to obtain sufficient hardness.

WO 96/02585 describes a coating composition based on a polyester polyol which is especially applicable in the automotive refinish industry. It has been found that such a refinish coating composition has long drying and curing times and, therefore, has the above-mentioned disadvantage of the productivity of a refinish operation being reduced, since the vehicles cannot be moved and worked on quickly after application of the finish.

Low VOC coating compositions are disclosed in EP-A-0 676 431. In this patent application 1,4-cyclohexane dimethanol is mentioned as a component in a coating composition with a VOC of less than 500g/l. Unfortunately, coating compositions comprising 1,4-cyclohexane dimethanol appear to have an unfavourable pot life/drying balance.

EP 720996 discloses coating compositions comprising high viscous polyesterpolyols obtained from the α,β-unsaturated dicarboxylic acids itaconic acid, maleic acid, or fumaric acid, or anhydrides thereof. The polyesters disclosed have low hydroxyl numbers and are highly viscous, and therefore are unsuitable for use in high-solid coating compositions.

Accordingly, there is a need for a high-solid coating composition which combines all the required properties, such as good thinnability, low VOC, good mixing properties, and low application viscosities, and results in a coating with fast drying times at low temperatures, high film hardness, good sandability, easy polishability, good resistance to water, acids, and solvents, and excellent durability.

The present idea relates to a coating composition according to claim 1.

The polyester oligomer has a weight average molecular weight Mw of less than 5,000, preferably less than 2,500, more preferably less than 2,000, most preferably between 500 and 1,500. The polyester oligomer has a hydroxyl functionality of 2 or more, preferably between 2 and 4. The hydroxyl value of the polyester oligomer is preferably in the range of 200 to 370 mg KOH/g oligomer.

EP-A-0 940 415 discloses a coating composition comprising a low-molecular weight polyester and a polyisocyanate. It has been found that the use of the polyesters disclosed by EP-A-0 940 415 in coating compositions provides coatings performing poorly in substrate wetting and film levelling.

The polyester oligomer of the invention is prepared from a polyol, a polycarboxylic acid, and a monocarboxylic acid according to known condensation methods.

Preferably, the polyol is a cycloaliphatic or aliphatic polyol having 2 to 15 carbon atoms. Examples of cycloaliphatic polyols include 1,4-cyclohexane dimethanol, 1,4-cyclohexane diol, 2,2-bis(4-hydroxycyclohexyl)propane, bishydroxymethyl tricyclodecane, and mixtures thereof. Examples of aliphatic polyols include glycerol, 1,2-propane diol, 1,3-propane diol, 2-methyl-1,3-propane diol, neopentyl glycol, 2,2,4-trimethyl-1,3-pentane diol, 1,6-hexane diol, trimethylol ethane, trimethylol propane, 1,2,6-hexanetriol, pentaerythritol, ditrimethylol propane, propoxylated pentaerythritol, ethoxylated trimethylol propane, 2-butyl-2-ethyl-1,3-propane diol, dimethylol propionic acid, and mixtures thereof. Preferably, the polyol is selected from trimethylol ethane, trimethylol propane, glycerol, pentaerythritol, ditrimethylol propane, and mixtures thereof.

Also preferred are mixtures of at least one polyol selected from trimethylol ethane, trimethylol propane, glycerol, pentaerythritol, and ditrimethylol propane with at least one diol having 2 to 15 carbon atoms. Preferred diols include 1,2-ethane diol, 1,2-propane diol, 1,3-propane diol, 3-methyl-1,3-propane diol, 2-butyl-2-ethyl-1,3-propane diol, dimethylol propionic acid, and 1,4-cyclohexane dimethanol.

The polycarboxylic acids are selected from the group of cyclic polycarboxylic acids, the esters or the anhydrides thereof, wherein the carboxyl groups are separated by 3 carbon atoms or less, and from the group of acyclic polycarboxylic acids, the esters or the anhydrides thereof, and mixtures thereof.

Cyclic polycarboxylic acids include aromatic polycarboxylic acids and cycloaliphatic polycarboxylic acids. Examples of aromatic polycarboxylic acids include isophthalic acid, phthalic acid, trimellitic acid, and mixtures thereof. Also included are the esters or the anhydrides thereof such as phthalic anhydride, trimellitic anhydride, and mixtures thereof. Examples of cycloaliphatic polycarboxylic acids include 1,2-cyclohexane dicarboxylic acid, 1,3-cyclohexane dicarboxylic acid, tetrahydrophthalic acid, endomethylene tetrahydrophthalic acid, hexahydrophthalic acid, methyl hexahydrophthalic acid, and mixtures thereof. Also included are the esters or the anhydrides thereof such as tetrahydrophthalic anhydride, endomethylene tetrahydrophthalic anhydride, hexahydrophthalic anhydride, methyl hexahydrophthalic anhydride, and mixtures thereof.

Examples of α,β-saturated acyclic polycarboxylic acids include malonic acid, succinic acid, glutaric acid, adipic acid, octenyl succinic acid (any isomer or mixture of isomers of the formula 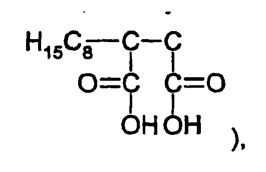 dodecenyl succinic acid (any isomer or mixture of isomers), azelaic acid, sebacic acid, and mixtures thereof. Also included are the esters or the anhydrides thereof such as dimethyl ester and diethyl ester of malonic acid, succinic anhydride, octenyl succinic anhydride (any isomer or mixture of isomers of 4-octenyl-5-hydro-1,3-furandione), dodecenyl succinic anhydride (any isomer or mixture of isomers of 4-dodecenyl-5-hydro-1,3-furandione), and mixtures thereof.

Preferably, the monocarboxylic acid of the polyester oligomer contains 18 or fewer carbon atoms. Preferred monocarboxylic acids are aliphatic, cycloaliphatic, and aromatic monocarboxylic acids having 6 to 18 carbon atoms and mixtures thereof, including propionic acid, hexanoic acid, stearic acid, isostearic acid, and oleic acid. Most preferred are monocarboxylic acids having 7 to 14 carbon atoms, such as heptanoic acid, octanoic acid, 2-ethylhexanoic acid, nonanoic acid, isononaoic acid, coconut oil fatty acids, decanoic acid, neodecanoic acid, dodecanoic acid, benzoic acid, o-, m-, and p-toluic acid, hexahydrobenzoic acid, t. butyl benzoic acid, and mixtures thereof.

Preferably, the polyester oligomer is prepared from reactants comprising
a) 40 - 50 wt.% of at least one polyol
b) 10 - 30 wt.% of at least one polycarboxylic acid selected from the group of cyclic polycarboxylic acids, the esters or the anhydrides thereof, wherein the carboxylic acids are separated by 3 carbon atoms or less, and from the group of α,β-saturated acyclic polycarboxylic acids, the esters or the anhydrides thereof, and
c) 25- 50 wt.% of at least one monocarboxylic acid, the sum of the wt.% indicated for the reactants (a), (b), and (c) always being 100 wt.%.

Examples of compounds comprising at least two isocyanate groups are aliphatic, alicyclic, and aromatic polyisocyanates such as trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, dodecamethylene diisocyanate, α,α'-dipropyl ether diisocyanate, dimeric acid diisocyanate, such as DDI 1410 ex Henkel, 1,3-cyclopentylene diisocyanate, 1,2-cyclohexylene diisocyanate, 1,4-cyclohexylene diisocyanate, 4-methyl-1,3-cyclohexylene diisocyanate, 4,4'-dicyclohexylene diisocyanate methane, 3,3'-dimethyl-4,4'-dicyclohexylene diisocyanate methane, norbomane diisocyanate, m- and p-phenylene diisocyanate, 1,3- and 1,4-bis(isocyanate methyl) benzene, 1,5-dimethyl-2,4-bis(isocyanate methyl) benzene, 1,3,5-triisocyanate benzene, 2,4- and 2,6-toluene diisocyanate, 2,4,6-toluene triisocyanate, α,α,α',α'-tetramethyl o-, m-, and p-xylylene diisocyanate, 4,4'-diphenylene diisocyanate methane, 4,4'-diphenylene diisocyanate, 3,3'-dichloro-4,4'-diphenylene diisocyanate, naphthalene-1,5-diisocyanate, isophorone diisocyanate, 4-isocyanatomethyl-1,8-octamethylene diisocyanate, and mixtures of the aforementioned polyisocyanates.

Preferred isocyanate compounds are the adducts of polyisocyanates, e.g., biurets, isocyanurates, allophanates, uretdiones, and mixtures thereof. Examples of such adducts are the adduct of two molecules of hexamethylene diisocyanate or isophorone diisocyanate to a diol such as ethylene glycol, the adduct of 3 molecules of hexamethylene diisocyanate to 1 molecule of water, the adduct of 1 molecule of trimethylol propane to 3 molecules of isophorone diisocyanate, the adduct of 1 molecule of pentaerythritol to 4 molecules of toluene diisocyanate, the isocyanurate of hexamethylene diisocyanate, available from Bayer under the trade designation Desmodur® N3390, a mixture of the uretdione and the isocyanurate of hexamethylene diisocyanate, available from Bayer under the trade designation Desmodur® N3400, the allophanate of hexamethylene diisocyanate, available from Bayer under the trade designation Desmodur® LS 2101, and the isocyanurate of isophorone diisocyanate, available from Hüls under the trade designation Vestanat T1890. Furthermore, (co)polymers of isocyanate-functional monomers such as α,α'-dimethyl-m-isopropenyl benzyl isocyanate are suitable for use. Finally, the above-mentioned isocyanates and adducts thereof may be present in the form of blocked isocyanates, as is known to the skilled person.

Optionally, other compounds may be present in the coating composition according to the present invention. Such compounds may be main binders and/or reactive diluents comprising reactive groups, which may be cross-linked with the aforesaid polyester oligomer and polyisocyanate. Examples include hydroxyl-functional binders, e.g., polyester polyols, polyether polyols, polyacrylate polyols, polyester polyacrylate hybride polyols, polyurethane polyols, polyester urethane polyols, polyurea polyol, cellulose acetobutyrate, hydroxyl-functional epoxy resins, alkyds, and dendrimeric polyols such as described in WO 93/17060. Also, hydroxyl-functional oligomers and monomers, such as castor oil, trimethylol propane may be present. Finally, ketone resins, aspartic esters, and latent or non-latent amino-functional compounds such as oxazolidines, ketimines, aldimines, secondary amines, and polyamines may be present. These and other compounds are known to the skilled person and are mentioned, int. al., in US 5,214,086. Preferably, polyacrylate polyols, polyester polyols, oxazolidines such as Incozol^{®} LV ex Industrial Copolymers Ltd and Zoldine RD20 ex Angus Chemical Company, ketimines such as the ketimine of isophorone diamine and methyl isobutyl ketone available as Desmophen VP LS 2965 ex Bayer, aldimines such as the aldimine of isophorone diamine and isobutyraldehyde available as Desmophen VP LS 2142 ex Bayer, the aspartic ester Desmophen VP LS 2973 ex Bayer, and mixtures thereof may be added to the coating composition of the present invention.

The ratio of isocyanate groups to isocyanate-reactive groups ranges from 0.5:1 to 3:1, preferably from 0.7:1 to 2:1.
The reaction of the hydroxyl groups with the isocyanate groups takes preferably place under the influence of a catalyst. Such catalysts are known to the skilled person. The catalyst is used in an amount of 0 to 10 wt.%, preferably 0.001 to 5 wt.%, more preferably in an amount of 0.01 to 1 wt.%, calculated on solid matter. Examples of the catalyst include dimethyl tin dilaurate, dibutyl tin dilaurate, dibutyl tin diacetate, tin octoate, zinc octoate, zirconium octoate, aluminium chelate, dimethyl tin dichloride, triethyl amine, triethylene diamine, dimethyl ethanol amine, and mixtures thereof.

Preferably, a pot life extender may be incorporated into the coating composition. Examples of such pot life extenders include 2,4-pentanedione, acetic acid, mercapto-functional compounds such as γ-mercapto-propyl-trimethoxysilane, and tertiary alcohols such as tertiary butanol and tertiary amyl alcohol.

The coating compositions may also contain pigments. Inorganic as well as organic pigments can be used. The composition can further comprise conventional additives, such as stabilisers, surfactants, fillers, UV-absorbers, catalyst blockers, anti-oxidants, pigment dispersants, flow additives, rheology control agents, corrosion inhibitors, and levelling agents.

A preferred embodiment of the present invention is a liquid high solids coating composition. The coating composition comprises less than 500 g/l of volatile organic solvent based on the total composition, preferably less than 450 g/l, more preferably less than 350 g/l, most preferably less than 300 g/l. The solvent can be any solvent known in the art. Examples of suitable solvents include aliphatic and aromatic hydrocarbons such as Solvesso^{®} 100, toluene, and xylene, alcohols such as butanol and propylene glycol monomethylether, esters such as butyl acetate, ethyl acetate, methoxy propyl acetate and ethoxy ethyl propionate, ketones such as acetone, methyl isobutyl ketone, methyl amyl ketone, and methyl ethyl ketone, or a mixture of any of these.

The coating compositions of the present invention comprise low-viscosity oligomers. The term "low-viscosity" relates to a viscosity less than 30 Pa.s (at 23°C). More preferably the viscosity is less than 20 Pa.s, most preferably less than 10 Pa.s.

The coating composition of the present invention may be applied to any substrate. The substrate may be, for example, metal, plastic, wood, glass, ceramic, or another coating layer. The other coating layer may be comprised of the coating composition of the current invention or it may be a different coating composition. The coating compositions of the current invention show particular utility as clear coats, base coats, pigmented top coats, primers, and fillers. The coating compositions can be applied by conventional means such as by spray gun, brush, or roller, spraying being preferred. Curing temperatures are between 0 and 80°C, and more preferably between 20 and 60°C. The compositions are particularly suitable in industrial applications, preferably in the preparation of coated metal substrates, such as in the refinish industry, in particular the body shop, to repair automobiles and transportation vehicles and in finishing large transportation vehicles such as trains, trucks, buses, and aeroplanes.

The invention is further illustrated by the following examples.

### Examples

In the Examples, the following abbreviations are used for the compounds as indicated.
- TMP: trimethylol propane
- PA: phthalic anhydride
- HHPA: hexahydrophthalic anhydride
- Me-HHPA: methyl hexahydrophthalic anhydride
- SA: succinic anhydride
- DBTL: dibutyl tin dilaurate
- DBTL (10): 10 wt. % DBTL in Solvesso 100/ xylene, 1/1 weight ratio

In the Examples the compounds listed below are available as indicated.

Kortacid is a mixture of linear C8 to C10 aliphatic monocarboxylic acids (wt. ratio about 55/45), ex Akzo Nobel Chemicals BV.
Byk 331 is a flow additive ex Byk-Chemie, 10 wt.% in ethoxy ethyl propionate. Disperbyk 110 is a wetting and dispersing additive ex Byk-Chemie, 52 wt.% in methoxy propyl acetate and alkyl benzene (1/1 weight ratio).
Desmodur^{®} N3390 is an aliphatic polyisocyanate, based on the isocyanurate of hexamethylene diisocyanate, ex Bayer.
Desmodur® L75 is an aromatic polyisocyanate based on toluene diisocyanate, ex. Bayer.
Tolonate^{®} HDT LV and Tolonate^{®} HDT 90 are aliphatic polyisocyanates, based on the isocyanurate of hexamethylene diisocyanate, ex Rhodia.
Vestanat^{®} T1890 E is an aliphatic polyisocyanate, based on the isocyanurate of isophorone diisocyanate, ex Hüls.
Incozol^{®} LV is an oxazolidine functional compound, ex Industrial Copolymers Ltd.
Dynasylan MTMO, γ-mercapto-propyl-trimethoxysilane, ex Hüls
Solvesso 100 is a solvent blend, ex Exxon.

In the examples, all amounts are given in parts by weight, pbw.

### Methods:

Unless otherwise stated, the properties of the coating compositions and the resulting films are measured as follows.

The viscosity of the polyester oligomer dispersions is given in Pa.s., measured at 23°C with a rotation viscometer type Rheometer MC1 from Physica.

The weight and number average molecular weight Mw and Mn are measured by means of gel permeation chromatography (GPC) with polystyrene calibration.

The DINC4 viscosity is measured in a DIN flow cup number 4 in accordance with DIN 53221-1987. The viscosity is given in seconds.

The VOC is calculated theoretically from the solvent content of the coating ingredients.

A coating is free to handle (FTH) when the mark from firm pushing with the thumb disappears after 1 or 2 minutes.

The hardness is measured using ISO 1522 after 1 day drying, except that a steel plate, treated as indicated in the examples, is used instead of a glass plate. The hardness is given in seconds.

The solvent resistance is measured by exposing coated steel panels dried for 1 day to petrol and xylene. The time required to soften the paint film to a pencil hardness of 2b gives the resistance. The resistance is given in minutes

The Enamel Hold Out (EHO) is determined as the total visual appearance. Each sample is rated for visual appearance on a scale of 1 to 10 (1 = very bad appearance, 10 = excellent appearance) by a panel of at least 3 people. The determination takes into account gloss, wrinkling, flow, and image clarity/distinctness of image. The average number will give the EHO.

Resistance to water immersion defined by the parameters adhesion and blistering is determined in accordance with ISO 2812. The presence of blisters in cured layers was tested in accordance with ASTM-D714. The results are scaled in values ranging from 1 (big blisters) to 10 (no blisters), with a further code for the blister density, F standing for "few," M for "medium," and D for "dense."

### Examples A to G - Preparation of a polyester oligomer

Seven polyester oligomers A to G according to the invention were prepared according to the following method. Amounts in pbw of the used contents are given in Table 1.

In a reaction vessel equipped with stirrer, heating system, thermocouple, packed column , condensor, and water separator the polyester monomers were heated in the mass proportions listed in Table 1. Under inert gas the temperature was increased gradually to 240°C. The reaction water was distilled off at such a rate that the temperature at the top of the column did not exceed 102°C. The reaction was conducted till the acid numbers listed in Table 1 were reached. The properties of the obtained solvent-free polyester oligomers A to G are presented in Table 1.

**Table 1**

| | A | B | C | D | E | F | G |
|---|---|---|---|---|---|---|---|
| COMPOSITION | | | | | | | |
| | | | | | | | |
| TMP | 43.5 | 43.5 | 49.2 | 42.9 | 49.2 | 45.7 | 45.6 |
| Kortacid 810 | 45.7 | 39.8 | 38.6 | 39.2 | 35.8 | 36.1 | 38.7 |
| Isononanoic acid | | | | | | | |
| PA | | | | | | | |
| HHPA | | 16.7 | | | | | |
| Methyl-HHPA | | | | 17.9 | | 18.2 | |
| SA | 10.8 | | 12.2 | | 15.0 | | 15.7 |
| Phosphorous acid (30%) | 0.1 | 0.1 | 0.1 | | 0.1 | 0.1 | |
| Hypophosphorous acid (50%) | | | | 0.1 | | | 0.1 |
| | | | | | | | |

| PROPERTIES | | | | | | | |
|---|---|---|---|---|---|---|---|
| Hydroxyl number (mg KOH/g) | 302 | 320 | 362 | 294 | 342 | 341 | 338 |
| Acid number (mg KOH/g) | 3.1 | 2.0 | 3.4 | 0.5 | 0.5 | 2.8 | 0.4 |
| Colour (APHA/HAZEN) | 136 | 109 | 213 | 40 | 152 | 128 | 47 |
| Viscosity (Pa.s) | 1.0 | 2.9 | 2.0 | 3.7 | 3.1 | 5.0 | 3.0 |
| Mn (GPC) | 776 | 592 | 668 | 710 | 703 | 660 | 661 |
| Mw (GPC) | 1075 | 820 | 956 | 976 | 1086 | 905 | 883 |
| Dispersity Mw / Mn | 1.39 | 1.39 | 1.43 | 1.38 | 1.54 | 1.37 | 1.34 |

| | | | | | | | |
|---|---|---|---|---|---|---|---|
| * as 90% (m/m) solution in n. butyl acetate | | | | | | | |

### Examples 1 to 7

Clear coat formulations were prepared as mentioned in Table 2. Steel panels were coated with a primer and a base coat, Autowave MM blue, ex Akzo Nobel Coatings BV. The clear coats were sprayed over the dried base coat and dried at 60°C. The properties of the resulting coatings are listed in Table 3.

**Table 2**

| | 1 | 2 | 3 | 4 | 5 | 6 | 7 |
|---|---|---|---|---|---|---|---|
| Polyester oligomer A | 50 | | | | | | |
| Polyester oligomer B | | 50 | | | | | |
| Polyester oligomer C | | | 50 | | | | |
| Polyester oligomer D | | | | 50 | | | |
| Polyester oligomer E | | | | | 50 | | |
| Polyester oligomer F | | | | | | 50 | |
| Polyester oligomer G | | | | | | | 50 |
| Desmodur^{®} N 3390 | 58 | 61.8 | 74.9 | 60.8 | 69.8 | 69.8 | 69.4 |
| Vestanat^{®} T1890 E | 18.2 | 19.4 | 23.5 | 19.1 | 21.9 | 21.9 | 21.7 |
| DBTL (10) | 2.0 | 2.0 | 2.0 | 2.0 | 2.0 | 2.0 | 2.0 |
| Byk 331 | 1.88 | 1.88 | 1.88 | 1.88 | 1.88 | 1.88 | 1.88 |
| 2,4-pentanedione | 6 | 6 | 6 | 6 | 6 | 6 | 6 |
| Methyl isoamyl ketone | 7.5 | 7.5 | 7.5 | 7.5 | 7.5 | 7.5 | 7.5 |
| Solvesso 100 | 11.1 | 13.4 | 15 | 12.4 | 15.1 | 15.1 | 14.9 |
| Ethoxy ethyl propionate | 11.1 | 13.4 | 15 | 12.4 | 15.1 | 15.1 | 14.9 |

**Table 3**

| Properties | 1 | 2 | 3 | 4 | 5 | 6 | 7 |
|---|---|---|---|---|---|---|---|
| VOC (g/l) | 306 | 323 | 321 | 317 | 327 | 327 | 326 |
| Viscosity (sec.) | 17.7 | 18.2 | 18.2 | 18.4 | 18.2 | 18.4 | 17.7 |
| Drying time (60°C; FTH) | 10 | 9 | 9 | 10 | 11 | 10 | 10 |
| EHO (1 day drying) | 8 | 7 | 4 | 4.8 | 5 | 5.8 | 4.5 |
| Hardness (50µ) | 96 | 111 | 117 | 119 | 107 | 97 | 113 |
| MEK resistance (2 days) | 45" | 45" | 2'30" | 1'30" | 1'30" | 1'30" | 1'30" |

### Examples 8-13

Primer formulations were prepared in different pigment to binder ratios (P/B) and different hydroxyl/isocyanate ratios. Steel panels were degreased and scuffed. The primer formulations were sprayed on the steel panels and dried for 30 minutes at 60°C. Subsequently, Autocryl LV 420 black, ex Akzo Nobel Coatings BV, was sprayed over the dried primer and dried at room temperature. The formulations are listed in Table 4. The properties of the resulting coatings are listed in Tables 5 to 8.

**Table 4**

| | P/B 3.2 | | | | P/B 4.0 | | |
|---|---|---|---|---|---|---|---|
| | 8 | 9 | 10 | | 11 | 12 | 13 |
| Polyester oligomer A | 16.8 | 16.8 | 16.8 | | 13.6 | 13.6 | 13.6 |
| Disperbyk 110 | 1.5 | 1.5 | 1.5 | | 1.5 | 1.5 | 1.5 |
| Titanium dioxide | 20.08 | 20.08 | 20.08 | | 20.08 | 20.08 | 20.08 |
| Carbon black | 0.04 | 0.04 | 0.04 | | 0.04 | 0.04 | 0.04 |
| Magnesium silicate | 7.95 | 7.95 | 7.95 | | 7.95 | 7.95 | 7.95 |
| Calcium carbonate | 20.8 | 20.8 | 20.8 | | 20.8 | 20.8 | 20.8 |
| Calcium silicate | 5.05 | 5.05 | 5.05 | | 5.05 | 5.05 | 5.05 |
| DBTL (10) | 0.7 | 0.7 | 0.7 | | 0.57 | 0.57 | 0.57 |
| MTMO | 0.86 | 0.86 | 0.86 | | 0.7 | 0.7 | 0.7 |
| Tolonate® HDT LV | 7.7 | 9.6 | 11.5 | | 6.2 | 7.75 | 9.3 |
| Desmodur® L75 | 8.1 | 10.1 | 12.2 | | 6.2 | 8.25 | 9.9 |
| Conventional additives | 0.88 | 0.88 | 0.88 | | 0.88 | 0.88 | 0.88 |
| Conventional solvents | 19.6 | 20.9 | 20.5 | | 15.55 | 18.75 | 19.55 |
| | | | | | | | |
| Ratio NCO/hydroxyl | 0.80 | 1.00 | 1.20 | | 0.80 | 1.00 | 1.20 |
| VOC (g/l) | 318 | 317 | 314 | | 298 | 329 | 316 |

**Table 5**

| | | | | | | | |
|---|---|---|---|---|---|---|---|
| Sandability (P400) | 8 | 9 | 10 | | 11 | 12 | 13 |
| Caking | 5 | 6 | 8 | | 5 | 8 | 8 |
| Ease of sanding | 7 | 7 | 7 | | 7 | 8 | 8 |
| Clogging | 8 | 7 | 7 | | 7 | 7 | 7 |
| Roll formation | 5 | 7 | 7 | | 6 | 7 | 7 |

**Table 6**

| | | | | | | | |
|---|---|---|---|---|---|---|---|
| Layer thickness primer after drying (µ) | 100 | 100 | 105 | | 90 | 100 | 90 |
| Blisters in primer | 10 | some | 9F | | 10 | 9F | 10 |
| Layer thickness topcoat after drying (µ) | 53 | 65 | 74 | | 53 | 65 | 63 |
| EHO | 9 | 9 | 9 | | 9 | 9 | 9 |
| Blisters in top coat | 10 | 10 | 9F | | 9F | 10 | 9F |

**Table 7**

| Adhesion after immersion | | | | | | | |
|---|---|---|---|---|---|---|---|
| Initial | 10 | 10 | 10 | | 10 | 10 | 10 |
| 2 days | 10 | 10 | 10 | | 10 | 10 | 10 |
| 7 days | 10 | 10 | 10 | | 8 | 10 | 10 |
| Recovery | 10 | 10 | 10 | | 2t-p/10 | 10 | 10 |
| 2 t-p = intercoat adhesion failure between topcoat and primer | | | | | | | |

**Table 8**

| Blisters after immersion | | | | | | | |
|---|---|---|---|---|---|---|---|
| 2 days | 9F | 10 | 9F | | 9F | 10 | 10 |
| 7 days | 9F | 10 | 9F | | 9F | 10 | 10 |

### Example 14

The following coating composition was sprayed on a degreased steel panel:

| | |
|---|---|
| Polyester oligomer B | 10.98 |
| Disperbyk 110 | 2.15 |
| Titanium dioxide | 15.8 |
| Carbon black | 0.05 |
| Calcium carbonate | 38.74 |
| Barium sulphate | 13.51 |
| Calcium silicate | 10 |
| DBTL | 0.16 |
| Tolonate^{®} HDT LV | 15.9 |
| Vestanat^{®} T1890 E | 15.9 |
| Incozol^{®} LV | 7 |
| Conventional additives | 0.25 |
| Conventional solvents | 29.66 |

Sandability after 30 min. at 60°C

| | |
|---|---|
| Ease of sanding | 8 |
| Clogging | 9 |
| Caking | 9 |
| Roll formation | 8 |

## Claims

1. Coating composition comprising:
A) at least one polyester oligomer prepared from reactants comprising
a) 20-60 wt. % of at least one polyol,
b) 5-30 wt. % of at least one polycarboxylic acid selected from the group of cyclic polycarboxylic acids, the esters or the anhydrides thereof, wherein the carboxyl groups are separated by 3 carbon atoms or less, and from the group of α, β-saturated acyclic polycarboxylic acids, the esters or the anhydrides thereof, and
c) 20-60 wt. % of at least one monocarboxylic acid,
the sum of the wt. % indicated for the reactants (a), (b), and (c) always being 100 wt. %, and the oligomer being a low-viscosity oligomer having a weight average molecular weight Mw of less than 5,000, and a hydroxyl number in the range of 200 to 400 mg KOH/g oligomer, and
B) at least one polyisocyanate,
wherein the term "low-viscosity" relates to a viscosity less than 30 Pa.s (at 23°C) and wherein the coating composition is curable at a temperature range of between 0 and 80°C.

2. Coating composition according to claim 1 wherein the polyester oligomer is prepared from reactants comprising
a) 40-50 wt. % of at least one polyol
b) 10-30 wt. % of at least one polycarboxylic acid selected from the group of cyclic polycarboxylic acids, the esters or the anhydrides thereof, wherein the carboxylic acids are separated by 3 carbon atoms or less, and from the group of α, β-saturated acyclic polycarboxylic acids, the esters or the anhydrides thereof, and
c) 25-50 wt. % of at least one monocarboxylic acid.

3. Coating composition according to either of the preceding claims wherein the polyester oligomer has a Mw of less than 2,000.

4. Coating composition according to any one of the preceding claims wherein the polyester oligomer has a hydroxyl number in the range from 200 to 370 mg KOH/g oligomer.

5. Coating composition according to any one of the preceding claims wherein the polyol is selected from trimethylol propane, trimethylol ethane, glycerol, pentaerythritol, ditrimethylol propane, and mixtures thereof.

6. Coating composition according to any one of the preceding claims wherein the polyol is a mixture of at least one polyol selected from trimethylol ethane, trimethylol propane, glycerol, pentaerythritol, and ditrimethylol propane with at least one diol having 2 to 15 carbon atoms.

7. Coating composition according to any one of the preceding claims wherein the monocarboxylic acid has 6 to 18 carbon atoms.

8. Coating composition according to any one of the preceding claims wherein the polycarboxylic acid is an anhydride.

9. Coating composition according to any one of the preceding claims wherein the coating composition additionally comprises polyacrylate polyols, polyester polyols, oxazolidines, ketimines, aldimines, aspartic esters, and mixtures thereof.

10. Coating composition according to any one of the preceding claims wherein the coating composition also comprises a pot life extender.

11. Coating composition according to claim 10 wherein the pot life extender is selected from 2,4-pentanedione, acetic acid, mercapto trimethoxy silyl propane, and mixtures thereof.

12. Coating composition according to any one of the preceding claims wherein the coating composition comprises less than 500 g/l of volatile organic solvent based on the total composition.

13. Use of the coating composition according to any one of the preceding claims in the field of finishing and refinishing of automobiles and large transportation vehicles.

## Patentansprüche

1. Beschichtungszusammensetzung, umfassend:
A) wenigstens ein Polyesteroligomer, das aus Reaktanten hergestellt ist, die Folgendes umfassen:
a) 20 bis 60 Gew.-% wenigstens eines Polyols;
b) 5 bis 30 Gew.-% wenigstens einer Polycarbonsäure, die aus der Gruppe der cyclischen Polycarbonsäuren, der Ester oder Anhydride davon, wobei die Carboxygruppen durch 3 Kohlenstoffatome oder weniger voneinander getrennt sind, und aus der Gruppe der α,β-gesättigten acyclischen Polycarbonsäuren, der Ester oder Anhydride davon ausgewählt ist; und
c) 20 bis 60 Gew.-% wenigstens einer Monocarbonsäure;
wobei die Summe der für die Reaktanten (a), (b) und (c) angegebenen Gewichtsprozentwerte stets 100 Gew.-% beträgt; und das Oligomer ein niedrigviskoses Oligomer mit einem Gewichtsmittel des Molekulargewichts Mw von weniger als 5000 und einer Hydroxylzahl im Bereich von 200 bis 400 mg KOH/g Oligomer ist; und
B) wenigstens ein Polyisocyanat;
wobei der Ausdruck "niedrigviskos" eine Viskosität von weniger als 30 Pa.s (bei 23 °C) bedeutet und wobei die Beschichtungszusammensetzung in einem Temperaturbereich zwischen 0 und 80 °C härtbar ist.

2. Beschichtungszusammensetzung gemäß Anspruch 1, wobei das Polyesteroligomer aus Reaktanten hergestellt ist, die Folgendes umfassen:
a) 40 bis 50 Gew.-% wenigstens eines Polyols;
b) 10 bis 30 Gew.-% wenigstens einer Polycarbonsäure, die aus der Gruppe der cyclischen Polycarbonsäuren, der Ester oder Anhydride davon, wobei die Carboxygruppen durch 3 Kohlenstoffatome oder weniger voneinander getrennt sind, und aus der Gruppe der α,β-gesättigten acyclischen Polycarbonsäuren, der Ester oder Anhydride davon ausgewählt ist; und
c) 25 bis 50 Gew.-% wenigstens einer Monocarbonsäure.

3. Beschichtungszusammensetzung gemäß einem der vorstehenden Ansprüche, wobei das Polyesteroligomer ein Mw von weniger als 2000 hat.

4. Beschichtungszusammensetzung gemäß einem der vorstehenden Ansprüche, wobei das Polyesteroligomer eine Hydroxylzahl im Bereich von 200 bis 370 mg KOH/g Oligomer hat.

5. Beschichtungszusammensetzung gemäß einem der vorstehenden Ansprüche, wobei das Polyol aus Trimethylolpropan, Trimethylolethan, Glycerin, Pentaerythrit, Ditrimethylolpropan und Gemischen davon ausgewählt ist.

6. Beschichtungszusammensetzung gemäß einem der vorstehenden Ansprüche, wobei das Polyol ein Gemisch von wenigstens einem Polyol, das aus Trimethylolethan, Trimethylolpropan, Glycerin, Pentaerythrit und Ditrimethylolpropan ausgewählt ist, mit wenigstens einem Diol mit 2 bis 15 Kohlenstoffatomen ist.

7. Beschichtungszusammensetzung gemäß einem der vorstehenden Ansprüche, wobei die Monocarbonsäure 6 bis 18 Kohlenstoffatome hat.

8. Beschichtungszusammensetzung gemäß einem der vorstehenden Ansprüche, wobei die Polycarbonsäure ein Anhydrid ist.

9. Beschichtungszusammensetzung gemäß einem der vorstehenden Ansprüche, wobei die Beschichtungszusammensetzung zusätzlich Polyacrylatpolyole, Polyesterpolyole, Oxazolidine, Ketimine, Aldimine, Asparaginsäureester und Gemische davon umfasst.

10. Beschichtungszusammensetzung gemäß einem der vorstehenden Ansprüche, wobei die Beschichtungszusammensetzung auch einen Topfzeitverlängerer umfasst.

11. Beschichtungszusammensetzung gemäß Anspruch 10, wobei der Topfzeitverlängerer aus 2,4-Pentandion, Essigsäure, Mercaptotrimethoxysilylpropan und Gemischen davon ausgewählt ist.

12. Beschichtungszusammensetzung gemäß einem der vorstehenden Ansprüche, wobei die Beschichtungszusammensetzung weniger als 500 g/l flüchtiges organisches Lösungsmittel, bezogen auf die Gesamtzusammensetzung, umfasst.

13. Verwendung der Beschichtungszusammensetzung gemäß einem der vorstehenden Ansprüche im Bereich der Lackierung und Reparaturlackierung von Autos und großen Transportfahrzeugen.

## Revendications

1. Composition de revêtement comprenant:
A) au moins un oligomère de polyester préparé à partir de réactifs comprenant
a) 20 à 60 % en poids d'au moins un polyol,
b) 5 à 30 % en poids d'au moins un acide polycarboxylique choisi dans le groupe comprenant les acides polycarboxyliques cycliques, leurs esters et leurs anhydrides, où les groupes carboxyles sont séparés par 3 atomes de carbone ou moins, et dans le groupe comprenant les acides polycarboxyliques acycliques α,β- saturés, leurs esters et leurs anhydrides, et
c) 20 à 60 % en poids d'au moins un acide monocarboxylique,
la somme des pourcentages en poids indiqués pour les réactifs (a), (b) et (c) étant toujours de 100% en poids, et l'oligomère étant un oligomère de faible viscosité, ayant une masse moléculaire moyenne en masse Mw inférieure à 5000, et un indice d'hydroxyle situé dans la plage allant de 200 à 400 mg KOH/g d'oligomère, et
B) au moins un polyisocyanate,
dans laquelle l'expression "faible viscosité" désigne une viscosité inferieure à 30 Pa.s (à 23°C), et dans lequel la composition de revêtement est durcissable à une température comprise entre 0 et 80 °C.

2. Composition de revêtement selon la revendication 1, dans laquelle l'oligomère de polyester est préparé à partir de réactifs comprenant:
a) 40 à 50 %en poids d'au moins un polyol,
b) 10 à 30 % en poids d'au moins un acide polycarboxylique choisi dans le groupe comprenant les acides polycarboxyliques cycliques, leurs esters et leurs anhydrides, où les groupes carboxyles sont séparés par 3 atomes de carbone ou moins, et dans le groupe comprenant les acides polycarboxyliques acycliques α,β-saturés, leurs esters et leurs anhydrides, et
c) 25 à 50 % en poids d'au moins un acide monocarboxylique.

3. Composition de revêtement selon l'une ou l'autre des revendications précédentes, dans laquelle l'oligomère de polyester a une Mw inférieure à 2000.

4. Composition de revêtement selon l'une quelconque des revendications précédentes, dans laquelle l'oligomère de polyester a un indice d'hydroxyle situé dans la plage allant de 200 à 370 mg KOH/g d'oligomère.

5. Composition de revêtement selon l'une quelconque des revendications précédentes, dans laquelle le polyol est choisi parmi le triméthylolpropane, le triméthyloléthane, le glycérol, le pentaérythritol, le ditriméthylolpropane, et leurs mélanges.

6. Composition de revêtement selon l'une quelconque des revendications précédentes, dans laquelle le polyol est un mélange d'au moins un polyol choisi parmi le triméthyloléthane, le triméthylolpropane, le glycérol, le pentaérythritol, et le ditriméthylolpropane, avec au moins un diol ayant de 2 à 15 atomes de carbone.

7. Composition de revêtement selon l'une quelconque des revendications précédentes, dans laquelle l'acide monocarboxylique a de 6 à 18 atomes de carbone.

8. Composition de revêtement selon l'une quelconque des revendications précédentes, dans laquelle l'acide polycarboxylique est un anhydride.

9. Composition de revêtement selon l'une quelconque des revendications précédentes, laquelle composition de revêtement comprend de plus des polyacrylates-polyols, des polyesters-polyols, des oxazolidines, des cétimines, des aldimines, des esters aspartates, et leurs mélanges.

10. Composition de revêtement selon l'une quelconque des revendications précédentes, laquelle composition de revêtement comprend aussi un agent prolongeant la durée de vie en pot.

11. Composition de revêtement selon la revendication 10, dans laquelle l'agent prolongeant la durée de vie en pot est choisi parmi la 2,4-pentanedione, l'acide acétique, le mercaptotriméthoxysilylpropane, et leurs mélanges.

12. Composition de revêtement selon l'une quelconque des revendications précédentes, laquelle composition de revêtement comprend moins de 500 g/l de solvant organique volatil, par rapport à la composition totale.

13. Utilisation de la composition de revêtement selon l'une quelconque des revendications précédentes, dans le domaine de la finition et du revernissage d'automobiles et de gros véhicules de transport.
